# EUROPÄISCHE PATENTSCHRIFT

(11) **EP 0 790 420 B1**
(45) Veröffentlichungstag und Bekanntmachung des Hinweises auf die Patenterteilung: **07.06.2000**
(21) Anmeldenummer: 97101093.9
(22) Anmeldetag: 24.01.1997
(51) Int. Cl.: F16C 29/02

(54) **Gleitblock für eine Teleskopsäule**
SLIDING BLOCK FOR A TELESCOPIC PILLAR
BLOC A COULISSE POUR UNE COLONNE TELESCOPIQUE

(30) Priorität: 17.02.1996 DE 19605953
(43) Veröffentlichungstag der Anmeldung: 20.08.1997
(73) Patentinhaber: AVS Danmark A/S, 2640 Hedehusene (DK)
(72) Erfinder: Bagger, Kjeld, 2640 Hedehusene (DK); Uhlenhaut, Ingo, 4410 Liestal (DK)
(74) Vertreter: WALTHER, WALTHER & HINZ Patentanwälte

(56) Entgegenhaltungen:
- DE-A- 3 216 427
- DE-A- 4 322 686
- DE-B- 1 165 350
- DE-U- 29 509 264
- FR-A- 2 600 384
- US-A- 3 802 285
- US-A- 4 652 146
- US-A- 5 143 454
- US-A- 5 181 780

## Beschreibung

Die vorliegende Erfindung betrifft einen Gleitblock zum Einsatz in einer sich aus mindestens zwei teleskopartig ineinandergreifenden Teilstücken zusammensetzenden Teleskopsäule, wobei der Gleitblock an einem Teilstück der Teleskopsäule anbringbar ist und in eine an einem anderen Teilstück angebrachte, axiale Nut einführbar ist, sowie Teleskopsäulen mit derartigen Gleitblöcken.

Aus der DE-U-295 09 264 und der US-A-3,802,285 (insbesondere Figur 8) ist eine sehr vorteilhafte Teleskopsäule bekannt, in der ein Gleitblock der eingangs genannte Art offenbart ist. Diese im Querschnitt kreisförmige Teleskopsäule weist mehrere Teilstücke auf, die teleskopartig ineinandergreifen. Jedes der Teilstücke hat an seiner Außen- und/oder Innenseite vier gleichmäßig über den Umfang verteilte axiale Führungsnuten. Dabei hat das innere Teilstück vier an seiner Außenseite angebrachte Führungsnuten und dementsprechend vier an seinem unteren Rand gehaltene Gleitblöcke, während das nächst äußere Teilstück vier an seiner Innenseite angebrachte Führungsnuten und vier an seinem oberen Rand gehaltene Gleitblöcke aufweist. Die jeweils benachbarten Teilstücke sind so angeordnet, daß der in der äußeren Führungsnut gehaltene Gleitblock in die innere Führungsnut des nächst größeren Teilstückes eingreift und umgekehrt. Die Gleitblöcke sind so dimensioniert und ausgestaltet, daß sie die einzelnen Teilstücke des Teleskopes reibungsarm und nahezu spielfrei halten.

Der aus dieser Druckschrift bekannte Gleitblock ist einstückig ausgeführt und aus Polybutylenterephtalat (PBTP) hergestellt. Im übrigen wird auf das Deutsche Gebrauchsmuster 295 09 264.5 voll Bezug genommen.

Aus der DE-A- 43 22 686 ist ein Greifarm mit zwei ineinander fahrbaren Schenkeln bekannt, wobei die Schenkel mittels mehrerer Gleitlager geführt werden. Diese Gleitlager sind mehrteilig ausgestattet, wobei einige Bauteile aus einem elastischen Material, insbesondere aus Tellerfedern gebildet sind, um etwaige Verkantungen des Schenkels aufzufangen.

Aus der DE-B- 11 65 350 ist eine geschlossene Zylinderführung für teleskopartig ineinandergreifende Hohlzylinder bekannt, bei der im innenliegenden Hohlzylinder über den Umfang verteilt, mehrere Metallschienen angebracht sind. Diese Metallschienen sind an ihren freien Enden U-förmig umgebogen und greifen in axial ausgerichtete Nuten auf der Innenseite des äußeren Hohlzylinders. Diese Metallschienen sind derart aus einem Stahlband hergestellt, daß sie wenigstens im Bereich der axialen Führungsnuten in Richtung auf deren Seitenflächen federnd ausgebildet sind.

Bei den eingangs genannten Teleskopsäulen, die vorzugsweise bei Operations- oder Montagetischen, sowie CAD-Arbeitsplätzen eingesetzt werden, kommt den Gleitblöcken eine entscheidende Funktion zu, denn sie müssen die Teilstücke der Teleskopsäule selbst unter größter außermittiger Belastung des Tisches einerseits möglichst spielfrei halten, um ein Herausrutschen oder Verkanten der Teilstücke zu verhindern, und andererseits ein möglichst reibungsfreies Aneinandergleiten der Teilstücke ermöglichen, um auch bei größter außenmittiger Belastung die Verfahrbarkeit des Tisches zu gewährleisten. Dies ist insbesondere deshalb schwer zu realisieren, weil die Anlageflächen zwischen Gleitblock und Führungsnut sehr klein sind, so daß bei außenmittiger Belastung des Tisches, insbesondere aufgrund der ungünstigen Hebelverhältnisse, eine hohe Flächenpressung entsteht, die zu hohen Reibungskräften führt.

Die aus der DE-U-295 09 264 und der US-A- 3,802,285 bekannten Gleitblöcke sind aus einem nahezu unverformbaren Material (z. B. PBTP) hergestellt, so daß die bei einer außermittigen Belastung oder bei einem auftretenden Drehmoment auf den Gleitblock wirkenden Kräfte in das jeweilige Teilstück der Teleskopsäule geleitet werden und dort, unter Umständen durch Verformen des Teilstückes, aufgefangen werden. Hiebei kann es vorkommen, daß die auf einzelne Gleitblöcke wirkende Kraft, die durch die vorhandene Hebelwirkung noch verstärkt wird, so groß wird, daß die Teleskopsäule aufgrund der nunmehr wirkenden hohen Flächenpressung und der damit verbundenen, hohen Reibungskräfte nicht mehr verfahrbar ist, obwohl das hier verwendete PBTP auf Aluminium an sich gute Gleitwerte aufweist.

Das aus der DE-A- 43 22 686 bekannte Gleitlager kann nur radial wirkende Kräfte aufnehmen und wäre folglich bei auftretenden Querkräften nicht in der Lage, diese zu kompensieren, wobei unter Umständen ein Verkanten der Teleskopsäule eintreten kann.

Die aus der DE-B 11 65 350 bekannte Metallschiene wird direkt in der metallischen Zylinderwand geführt, was zu hohen Reibungswiderständen führt. Auch kann hierbei mit der Zeit ein gewisser Verschleiß auftreten, der Ursache für weiteres Spiel sein kann. Darüber hinaus ist das Einstellen der jeweils gewünschten Federkraft mit einer derartigen Metallschiene nur schwer zu erreichen.

Daher liegt der vorliegenden Erfindung die Aufgabe zugrunde, einen Gleitblock und eine Teleskopsäule der eingangs genannten Art dahingehend weiterzubilden, daß ein Verfahren der Teleskopsäule auch unter hoher, außermittiger Belastung möglich ist.

Als technische Lösung dieser Aufgabe wird erfindungsgemäß vorgeschlagen, den Gleitblock der eingangs genannten Art dahingehend weiterzubilden, daß sich der Gleitblock aus einem Basiselement und mindestens einem Aufsatzelement oder aus zwei Basiselementen zusammensetzt, und daß innerhalb des Gleitblocks ein Federelement derart angeordnet ist, daß das Basiselement und das Aufsatzelement oder die beiden Basiselemente gegen Seitenwände der axialen Nut gedrückt werden.

Ein nach dieser technischen Lehre ausgeführter Gleitblock hat den Vorteil, daß der Gleitblock aufgrund der Federwirkung in den Führungsnuten vorgespannt werden kann. Der Grad der Vorspannung wird hierbei je nach Ausführungsform und Anwendungsgebiet durch Auswahl und Dimensionierung eines geeigneten Federelementes individuell eingestellt.

Durch die Vorspannung werden etwaige, fertigungsbedingte Toleranzen im Gleitblock bzw. in der Führungsnut ausgeglichen, so daß der Gleitblock stets spielfrei geführt wird. Dies führt zu niedrigeren Fertigungskosten, da hierdurch eine toleranzarme, und damit teure Fertigung nicht mehr notwendig ist.

Ein weiterer, besonderer Vorteil der erfindungsgemäßen Gleitblöcke besteht darin, daß die am Teilstück auftretende Kraft durch die Federelemente auf die über den Umfang verteilt angeordneten Gleitblöcke verteilt wird, so daß die auf einen einzelnen Gleitblock wirkende Kraft, und somit dessen Flächenpressung, niedrig gehalten wird. Dies führt zu niedrigen Reibkräften am Gleitblock und gewährleistet eine Verfahrbarkeit des Teleskopes auch bei hoher, außermittiger Belastung des Tisches.

Bei einer üblichen Teleskopsäule, zum Beispiel bei Operations- oder Montagetischen, bei CAD-Arbeitsplätzen oder dergleichen, sind gleichmäßig über den Umfang verteilt vier vertikal verlaufende Führungsnuten vorgesehen. In einer bevorzugten Ausführungform sind die erfindungsgemäßen Gleitblöcke vertikal in der Führungsnut gehalten, wobei die Federelemente in tangentialer Richtung (Umfangsrichtung) wirken. Dies hat den Vorteil, daß die in horizontaler Richtung außermittig am Tisch angreifende Kraft von sämtlichen Gleitblöcken nahezu gleichmäßig aufgenommen wird, und daß die vertikal außermittig angreifende Kraft bevorzugt von den quer zur Biegelinie befindlichen Führungsnuten und deren Gleitblöcken aufgenommen wird, wobei jedoch die aufzunehmende Kraft entsprechend der Federkonstante der Federelemente auch auf die anderen Gleitblöcke übertragen wird.

In einer weiteren, bevorzugten Ausführungsform sind über den Umfang verteilt mindestens zwei Gleitblöcke vorgesehen, die ein tangential und radial wirkendes Federelement aufweisen. Dieses Federelement kann insbesondere ein quaderförmiges Federkissen aus Weich-PVC sein, welches in zwei sich entsprechenden Gehäuseteilen gehalten ist. Dies hat den Vorteil, daß der Gleitblock in tangentialer und in radialer Richtung zwischen den Teilstücken verspannt ist und die Teilstücke spielfrei und reibungsarm führt. Hierdurch ist es möglich, die Teleskopsäule mit nur zwei oder drei statt ansonsten vier oder mehr Gleitblöcken je Umfangsebene auszustatten, was zu einer Senkung der Fertigungskosten führt.

In einer anderen, bevorzugten Ausführungsform wirken die Federelemente zweier sich gegenüberliegender Führungsnuten in tangentialer Richtung (Umfangsrichtung), während die Federelemente der Gleitblöcke der anderen beiden Führungsnuten in radialer Richtung wirken. Dies hat den Vorteil, daß eine vertikal angreifende, außermittige Kraft von den Gleitblöcken aller vier Führungsnuten aufgenommen wird, insbesondere dann, wenn die Führungsnuten mit den radial wirkenden Gleitblöcken auf der Biegelinie und die Führungsnuten mit den tangential wirkenden Gleitblöcken quer zur Biegelinie angeordnet sind. Dabei ist die Biegelinie die Verbindungslinie vom Krafteinleitungspunkt zur Mittelachse der Teleskopsäule.

In einer bevorzugten Weiterbildung setzt sich das Federelement aus zwei Federkissen aus Weich-PVC zusammen. Diese Federkissen sind in entsprechende Aufnahmen im Basiselement eingelegt und sind elastisch ausgebildet, so daß sie unter Kraftaufwendung zusammendrückbar sind.

In anderen Ausführungsformen kann das Federelement auch aus einem oder mehreren Tellerfedern oder Schraubenfedern gebildet sein. Auch eine Kombination von einem oder mehreren Federkissen mit einer oder mehreren Tellerfedern bzw. Schraubenfedern ist möglich.

In einer anderen, besonders bevorzugten Ausführungsform sind die Federkissen, Tellerfedern oder Schraubenfedern eines Federelementes parallel geschaltet. Hierdurch wird eine höhere Federkraft erzielt.

In einer anderen Ausführungsform ist auch eine Kombination von Parallel- und Reihenschaltung der Federn denkbar.

Damit das beim Zusammendrücken des Weich-PVC verdrängte Material ausweichen kann, sind im Aufsatzelement und/oder Basiselement eine oder mehrere Ausparungen vorgesehen. Diese Aussparungen können rund, quadratisch oder schlitzartig ausgebildet sein.

In einer weiteren, bevorzugten Ausführungsform verspannt das Federelement das Basiselement und das bzw. die Aufsatzelemente in der Führungsnut, so daß keine zusätzlichen Befestigungsmittel notwendig sind. Vielmehr ist es ausreichend, den Gleitblock mittels seinem angeformten, und vom Basiselement abstehenden Stift in eine entsprechende Bohrung des jeweiligen Teilstückes einzuschieben. Dieser Stift kann aus Metall oder aus Kunststoff, insbesondere aus PBTP sein.

In einer weiteren, bevorzugten Ausführungsform ist der Gleitblock, vor allem das Basiselement, aus einem glasfaserverstärktem PBTP hergestellt. Durch Hinzufügen von Glasfasern zum PBTP erhöht sich dessen Festigkeit, so daß es möglich wird, den Stift zum Halten des Gleitblockes am Teilstück anzuformen, insbesondere das Basiselement und den Stift als ein Bauteil zu gießen.

Im folgenden werden anhand der beigefügten Zeichnung weitere Ausführungsformen des erfindungsgemäßen Gleitblockes beschrieben, aus denen sich weitere Vorteile ergeben. Ebenso können die vorstehend genannten und die noch weiter aufgeführten Merkmale jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter.
- Figur 1: zeigt eine perspektivische Darstellung einer Teleskopsäule;
- Figur 2: zeigt in perspektivischer Explosionsdarstellung eine erste Ausführungsform eines erfindungsgemäßen Gleitblockes;
- Figur 3: zeigt in perspektivischer Explosionsdarstellung eine zweite Ausführungsform eines erfindungsgemäßen Gleitblockes;
- Figur 4: zeigt in perspektivischer Explosionsdarstellung eine dritte Ausführungsform eines erfindungsgemäßen Gleitblockes;
- Figur 5: zeigt in perspektivischer Explosionsdarstellung eine vierte Ausführungsform eines erfindungsgemäßen Gleitblockes;
- Figur 6: zeigt in perspektivischer Darstellung eine fünfte Ausführungsform eines erfindungsgemäßen Gleitblockes;
- Figur 7: zeigt den Gleitblock gemäß Figur 6 geschnitten entlang Linie VII - VII in Figur 6 in einem in die Teleskopsäule eingebauten Zustand.

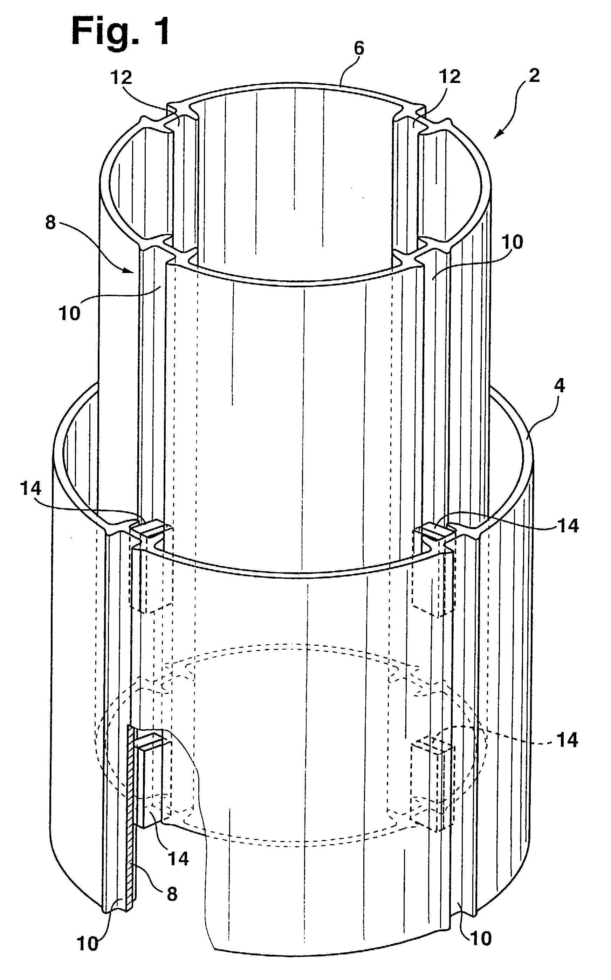

**Figur 1** zeigt in perspektivischer Darstellung eine Teleskopsäule **2** mit einem äußeren Teilstück **4**, in welches ein im Durchmesser kleineres, inneres Teilstück **6** eingesetzt ist. Sowohl das äußere Teilstück **4**, als auch das innere Teilstück **6** weisen gleichmäßig über den Umfang verteilt vier axial angeordnete Führungselemente **8** auf. Diese Führungselemente **8** sind in das jeweilige Teilstück **4**, **6** integriert und umfassen eine nach außen weisende Außennut **10** und eine nach innen weisende Innennut **12**. Jeweils am oberen bzw. unteren Rand eines jeden Teilstückes **4**, **6** sind in den Führungselementen **8** nicht dargestellte Aufnahmemittel vorgesehen, in denen die Gleitblöcke **14** gehalten werden können.

In der in **Figur 1** dargestellten Ausführungsform ist das äußere und das innere Teilstück **4**, **6** aus einem stranggepreßten Aluminiumprofil hergestellt, welches die Führungselemente **8** bereits aufweist.

In einer anderen, nicht dargestellten Ausführungsform sind die Teilstücke **4**, **6** mit einem Überzug versehen, der ein besonders reibungsarmes Gleiten der Gleitblöcke **14** in den Führungselementen **8** ermöglicht.

In einer nicht dargestellten Ausführungsform ist das innere Teilstück **6** unten angeordnet und bildet den Fuß der Teleskopsäule, während das äußere Teilstück **4** oben angeordnet ist, so daß der Tisch am äußeren Teilstück befestigt ist. Hierdurch wird erreicht, daß kein Schmutz oder Staub in den Spalt zwischen dem inneren **6** und dem äußeren Teilstück **4** fallen kann.

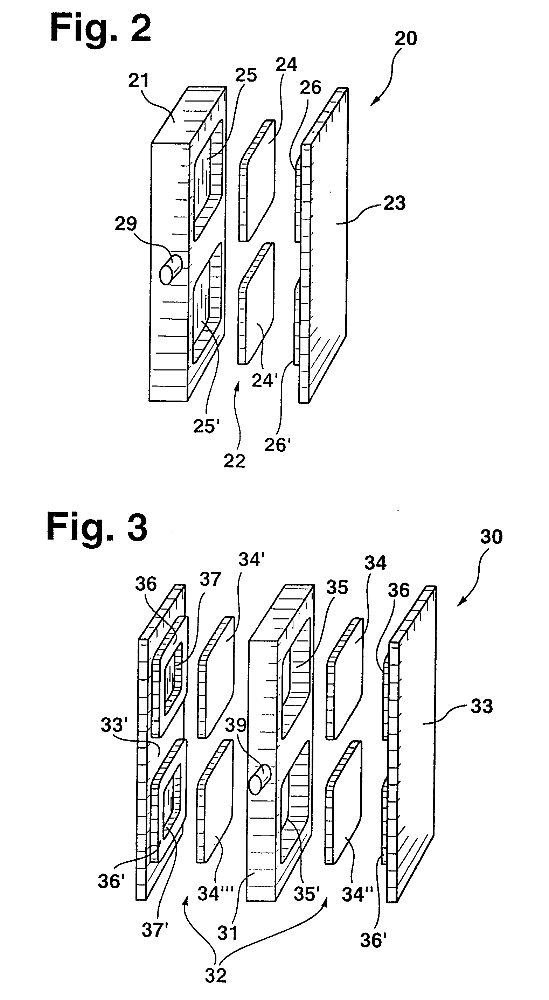

In den **Figuren 2** bis **4** sind verschiedene Ausführungsformen des erfindungsgemäßen Gleitblockes dargestellt. Dabei zeigt **Figur 2** einen Gleitblock **20** mit einem Basiselement **21** zur Aufnahme eines Federelementes **22** und mit einem Aufsatzelement **23**, welches das Basiselement **21** deckelartig verschließt. Das Federelement **22** setzt sich aus zwei parallel angeordneten Federkissen **24**, **24'** aus Weich-PVC zusammen, welche in entsprechende Aussparungen **25**, **25'** im Basiselement **21** eingelegt sind.

Auf der dem Basiselement **21** zugewandten Seite des Aufsatzelementes **23** sind entsprechend den Konturen der Aufnahmen **25**, **25'** zwei Vorsprünge **26**, **26'** vorgesehen, die paßgenau und nahezu spielfrei in die Aufnahmen **25**, **25'** eingreifen, um das Aufsatzelement **23** am Basiselement **21** zu halten. Auf der dem Führungselement **8** zugewandten Seite des Basiselementes **21** ist ein im Querschnitt runder Stift **29** aus demselben Material wie das Basiselement **21** angeformt, der in entsprechende, nicht dargestellte Bohrungen in den Führungselementen **8** eingreift, um den Gleitblock **20** in der Außen- bzw. Innennut **10**, **12** zu halten.

In einer nicht dargestellten Ausführungsform ist der Stift im Querschnitt viereckig, insbesondere quadratisch ausgeführt. Auch kann der Stift aus Metall geferigt und in das Basiselement **21** eingesetzt sein.

In einer anderen, nicht dargestellten Ausführungsform sind im Basiselement und/oder im Aufsatzelement runde, viereckige oder schlitzartige Aussparungen vorgesehen, in die Weich-PVC ausweichen kann, sobald der Gleitblock zusammengedrückt wird.

Die in **Figur 3** dargestellte, zweite Ausführungsform eines erfindungsgemäßen Gleitblockes **30** umfaßt im Gegensatz zu der in **Figur 2** dargestellten ersten Ausführungsform neben einem Basiselement **31** und einem Federelement **32** zwei baugleiche Aufsatzelemente **33**, **33'**, die das Basiselement **31** von beiden Seiten her deckelartig verschließen. In dieser Ausführungsform umfaßt das Federelement vier Federkissen **34**, **34', 34"**, **34"'**, von denen jeweils zwei parallel und zwei hintereinander geschaltet sind.

In einer anderen Ausführungsform werden nur zwei Federkissen eingesetzt, die entsprechend dicker dimensioniert sind.

Im Basiselement **31** sind zwei Durchbrüche **35**, **35'** vorgesehen, in welche die Federkissen **34**, **34'**, **34"**, **34"'** eingelegt sind und in welche am Aufsatzelement **33**, **33'** angeformte Vorsprünge **36**, **36'** eingreifen, um die Aufsatzelemente **33**, **33'** paßgenau und nahezu spielfrei am Basiselement **31** zu halten.

Auch an dem Basiselement **31** ist ein Stift **39** angebracht, mit dem der Gleitblock **30** in einer entsprechenden Bohrung der Führungselemente **8** gehalten ist.

In einer anderen, nicht dargestellten Ausführungsform sind im Basiselement statt der Durchbrüche vier Aufnahmen für jedes der Federkissen vorgesehen.

Die Vorsprünge **36**, **36'** weisen im wesentlichen viereckige Aussparungen **37**, **37'** auf, in die das Weich-PVC ausweichen kann, sobald der Gleitblock **30** zusammengedrückt wird.

In einer anderen, nicht dargestellten Ausführungsform sind die Aussparungen als schlitzartige Sicken ausgeführt.

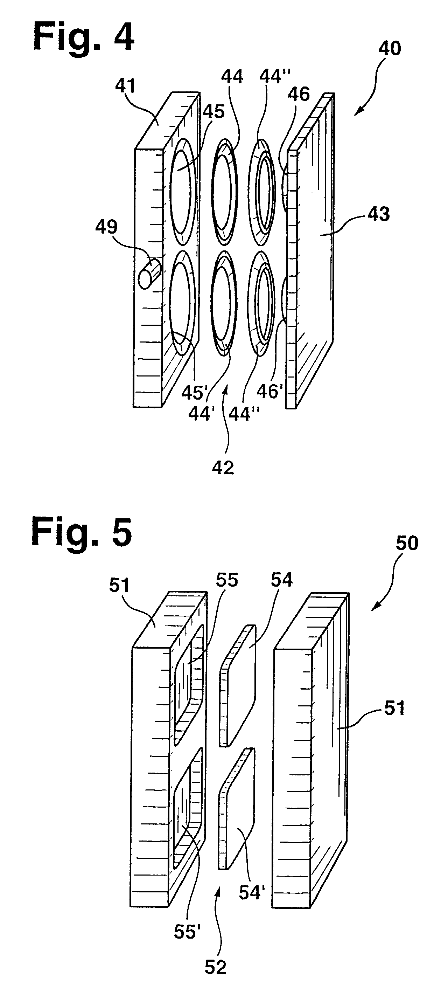

Die in **Figur 4** dargestellte dritte Ausführungsform eines erfindungsgemäßen Gleitblockes **40** ist der ersten Ausführungsform gemäß **Figur 2** ähnlich und umfaßt ebenfalls ein Basiselement **41** zur Aufnahme eines Federelementes **42**, welches von einem Aufsatzelement **43** deckelartig verschlossen ist. Im Gegensatz zur ersten Ausführungsform setzt sich das Federelement **42** aus vier Tellerfedern **44**, **44'**, **44'**, **44"'** zusammen, von denen jeweils zwei in Reihe und diese dann parallel angeordnet sind. Im Basiselement **41** sind zwei Federaufnahmen **45**, **45'** zur Aufnahme der Tellerfedern **44**, **44'** vorgesehen, während an der dem Basiselement **41** zugewandten Seite des Aufsatzelementes **43** Federvorsprünge **46**, **46'** angeformt sind, die in die Öffnung der Tellerfedern **44"**, **44"'** eingreifen, um diese zu halten. Auch an diesem Basiselement **41** ist ein Stift **49** angebracht, mit dem der Gleitblock **40** im Führungselement **8** gehalten ist.

In einer anderen, nicht dargestellten Ausführungsform setzt sich das Federelement aus einer oder mehreren Schraubenfedern zusammen, die parallel oder sowohl parallel als auch in Reihe geschaltet sind. In noch einer anderen Ausführungsform ist ein mit Tellerfedern versehener Gleitblock mit zwei Aufsatzelementen ausgeführt. In wieder einer anderen Ausführungsform setzt sich das Federelement aus einer Kombination von Federkissen, Tellerfedern und/oder Schraubenfedern zusammen.

Die in **Figur 5** dargestellte vierte Ausführungsform eines erfindungsgemäßen Gleitblockes **50** ist der ersten Ausführungsform gemäß **Figur 2** ähnlich, umfaßt jedoch zwei nahezu gleich ausgebildete Basiselemente **51** zur Aufnahme eines Federelementes **52**. Im Gegensatz zur ersten Ausführungsform sind die Federkissen **54**, **54'** des Federelementes **52** zwischen den Basiselementen **51** gehalten und in den Aufnahmen **55**, **55'** geführt.

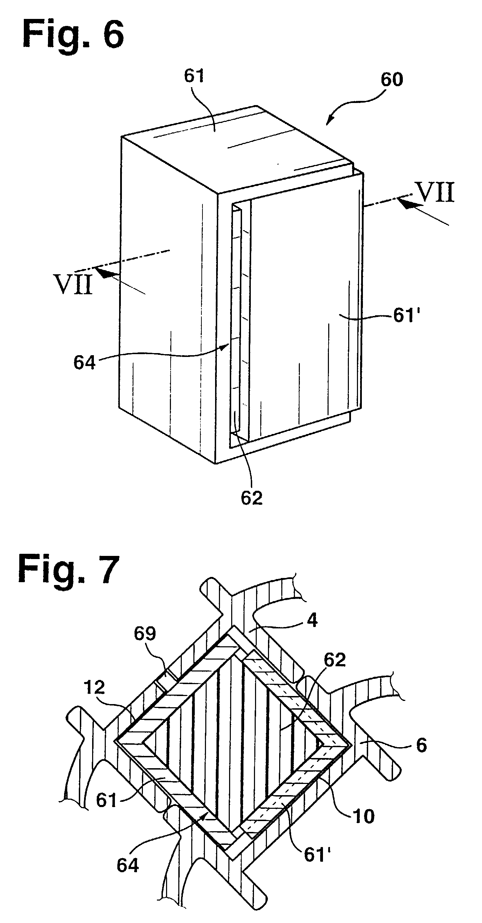

Die in den **Figuren 6** und **7** dargestellte fünfte Ausführungsform eines erfindungsgemäßen Gleitblockes **60** umfaßt zwei hohle, quaderförmige Basiselemente **61**, **61'**, die an jeweils zwei Längsseiten offen sind. Die Basiselemente **61**, **61'** sind im wesentlichen Baugleich ausgeführt außer, daß das Basiselement **61** etwas länger ausgebildet ist, damit sich die beiden Basiselemente **61**, **61'** ineinander schachteln lassen. Zwischen den Basiselementen **61**, **61'** ist ein Federelement **62** bestehend aus einem quaderförmigen Federkissen **64** angeordnet, welches den Gleitblock **60** sowohl in radialer als auch in tangentialer Richtung federt. Mittels einem am Basiselement **61** angebrachten Stift **69** wird der Gleitblock **60** in der Innennut **12** des äußeren Teilstückes **4** gehalten.

Die in den **Figuren 1** bis **7** beschriebenen Gleitblöcke sind aus Polybutylenterephtalat (PBTP) gegossen, wobei das Baisiselement mit Glasfasern verstärkt ist. Der Glasfaseranteil beträgt ca. 30 %. Dabei wird der Stift bei der Herstellung des Basiselementes gleich mit angegossen.

Im folgenden wird die Funktionsweise der Teleskopsäule **2** gemäß **Figur 1** mit einem erfindungsgemäßen Gleitblock, insbesondere gemäß den **Figuren 2**, bis **7**, näher erläutert:

Am unteren Rand des inneren Teilstückes **6** ist in jede Außennut **10** ein Gleitblock **14** eingesetzt, der in die Innennut **12** des nächstgrößeren, äußeren Teilstückes **4** eingreift. Entsprechendes gilt für die am oberen Rand des äußeren Teilstückes **4** angebrachten Gleitblöcke **14**, die in die Außennut **10** des inneren Teilstückes **6** eingreifen. Die Gleitblöcke **14** sind unverrückbar an dem jeweiligen Teilstück **4**, **6** gehalten. In den hier beschriebenen Ausführungsformen sind sämtliche Gleitblöcke **14** aus Polybutylenterephtalat (PBTP) hergestellt, weil dieses PBTP auf den aus Aluminium hergestellten Teilstücken **4**, **6** besonders gut gleitet.

Die stranggepreßten Aluminiumprofile können aus fertigungstechnischen Gründen nur mit gewissen Fertigungstoleranzen hergestellt werden. Diese betragen, beispielsweise bei einer 12 mm breiten Außen- oder Innnennut **10**, **12** ca. ± 0,1 mm, während die Maßtoleranz über einen Gesamtdurchmesser von ca. 100 mm, betrachtet bei sich gegenüberliegenden Führungsnuten **8**, bereits ca. ± 0,6 mm beträgt. Diese Fertigungstoleranzen werden durch die federbelasteten Gleitblöcke **14** ausgeglichen, so daß diese spielfrei in den Führungselementen **8** gehalten sind.

Durch die vertikale Anordnung tangential wirkender Gleitblöcke **14** in der Außen- bzw. Innennut **10**, **12** wirken die Federelemente in Umfangs- bzw. Tangentialrichtung. Hierdurch wird das Basiselement und das Aufsatzelement durch das Federelement gegen die Seitenwände der jeweiligen Nut **10**, **12** gedrückt, wobei die gewünschte Vorspannung durch Auswahl eines geeigneten Federelementes eingestellt werden kann. In jedem Fall jedoch wird die fertigungsbedingte Toleranz von ca. ± 0,1 mm ausgeglichen, so daß eine spielfreie Führung des Gleitblockes **14** in der Nut **10**, **12** gewährleistet ist.

Tritt nun an dem auf dem inneren Teilstück **6** angebrachten, nicht dargestellten Tisch eine in horizontaler Richtung außermittig angreifende Kraft auf, so wird die Teleskopsäule **2** in sich verdreht und die angreifenden Kräfte werden von den Gleitblöcken **14** und deren Federelementen gleichmäßig aufgenommen.

Tritt nun an dem auf dem inneren Teilstück **6** angebrachten, nicht dargestellten Tisch eine in vertikaler Richtung außermittig angreifende Kraft auf, so wird die Teleskopsäule **2** geknickt.

Hierbei werden die vertikal, außermittig auftretenden Kräfte jedoch primär von den Gleitblöcken **14** aufgenommen, die quer zur Biegelinie angeordnet sind, bzw. jeder Gleitblock **14** nimmt nur den Anteil der Kraft auf, der quer zum Gleitblock **14** auftritt. Durch das im Gleiblock **14** angeordnete Federelement wird die auftretende Kraft entsprechend der jeweiligen Federkonstante anteilsmäßig auch auf die anderen Gleitblöcke **14** übertragen, so daß die von einem einzelnen Gleitblock **14** aufzunehmende Kraft gering bleibt.

Folglich kann eine Teleskopsäule **2**, die mit den erfindungsgemäßen Gleitblöcken **14** ausgestattet ist, sehr viel höhere, außermittige Kräfte aufnehmen, weil die Flächenpressung in den einzelnen Gleitblöcken **14**gering bleibt, wodurch eine Verfahrbarkeit des Tisches auch unter großer vertikaler, außermittiger Belastung gewährleistet ist.

In einer anderen, nicht dargestellten Ausführungsform, sind in die Teleskopsäule neben tangential wirkenden Gleitblöcken auch Gleitblöcke eingesetzt, deren Federelement in radialer Richtung wirkt. Allerdings haben diese Federelemente einen sehr viel größeren Federweg, da die in dieser Richtung auftretenden Fertigungstoleranzen mit ca. ± 0,6 mm sehr viel größer sind. Die Anordnung von tangential und radial wirkenden Gleitblöcken in einem Teilstück ist vorteilhaft bei Anwendungen, bei denen eine große außermittige Belastung in nur einer Richtung zu erwarten ist.

Dies ist beispielsweise bei Operationstischen der Fall, da diese relativ schmal, dafür aber sehr lang sind.

Bei Teleskopsäulen, die bei Operationstischen eingesetzt werden, sind die Gleitblöcke, die in Längsrichtung des Tisches liegen, als radial wirkende Gleitblöcke ausgeführt, während die Gleitblöcke, die in Querrichtung des Tisches, liegen als tangential wirkende Gleitblöcke ausgelegt sind.

Hierdurch wird erreicht, daß die vertikal, außermittig auftretende Kraft noch gleichmäßiger als bei der oben beschriebenen Ausführungsform von allen vier Führungselementen aufgenommen wird, so daß sich die maximale Reibkraft an einem der Gleitblöcke weiter verringert. Dies hat zur Folge, daß die auftretenden Reibungskräfte sehr viel geringer sind und daß eine Verfahrbarkeit des Operationstisches trotz hoher außermittiger Belastung gewährleistet ist.

In einer Weiterentwicklung dieser Ausführungsform, sind in die radial wirkenden Gleitblöcke durch radial und gleichzeitg tangential wirkende Gleitblöcke insbsondere gemäß den **Figuren 6** und **7** ersetzt. Hierdurch wird eine noch gleichmäßigere Aufnahme der vertikal außermittig angreifenden Kräfte erreicht.

### Bezugszeichenliste:

- 2: Teleskopsäule
- 4: äußeres Teilstück
- 6: inneres Teilstück
- 8: Führungselemente
- 10: Außennut
- 12: Innennut
- 14: Gleitblock
- 20: Gleitblock
- 21: Basiselement
- 22: Federelement
- 23: Aufsatzelement
- 24, 24': Federkissen
- 25, 25': Aufnahme
- 26, 26': Vorsprung
- 29: Stift
- 30: Gleitblock
- 31: Basiselement
- 32: Federelement
- 33, 33': Aufsatzelement
- 34, 34', 34'', 34''': Federkissen
- 35, 35': Durchbruch
- 36, 36': Vorsprung
- 37, 37': Aussparung
- 39: Stift
- 40: Gleitblock
- 41: Basiselement
- 42: Federelement
- 43: Aufsatzelement
- 44, 44', 44", 44''': Tellerfeder
- 45, 45': Federaufnahme
- 46, 46': Federvorsprung
- 49: Stift
- 50: Gleitblock
- 51: Basiselement
- 52: Federelement
- 54, 54': Federkissen
- 55, 55': Aufnahme
- 60: Gleitblock
- 61, 61': Basiselement
- 62: Federelement
- 64: Federkissen
- 69: Stift

## Patentansprüche

1. Gleitblock zum Einsatz in einer sich aus mindestens zwei teleskopartig ineinandergreifenden Teilstücken zusammensetzenden Teleskopsäule (2), wobei, der Gleitblock (14, 20, 30, 40, 50, 60) an einem Teilstück der Teleskopsäule (2) anbringbar ist und in eine an einem anderen Teilstück angebrachte, axiale Nut (12) einführbar ist,
**dadurch gekennzeichnet,**
dass sich der Gleitblock (14, 20, 30, 40, 50, 60) aus einem Basiselement (21, 31, 41) und mindestens einem Aufsatzelement (23, 33, 33', 43) oder aus zwei Basiselementen (51, 61, 61') zusammensetzt, und dass innerhalb des Gleitblockes (14, 20, 30, 40, 50, 60) ein Federelement (22, 32, 42, 52, 62) derart angeordnet ist, dass das Basiselement (21, 31, 41) und das Aufsatzelement (23, 33, 33', 43) oder die beiden Basiselemente (51, 61, 61') gegen Seitenwände der axialen Nut (12) gedrückt werden.

2. Gleitblock nach Anspruch 1,
**dadurch gekennzeichnet,**
dass das Federelement (22, 32, 42, 52,62) das Basiselement (21, 31, 41) und das Aufsatzelement (23, 3, 33', 43) oder die beiden Basiselemente (51, 61, 61') auch gegen die teleskopartig ineinandergreifenden Teilstücke der Teleskopsäule (2) drückt.

3. Gleitblock nach wenigstens einem der vorangehenden Ansprüche,
**dadurch gekennzeichnet,**
dass das Federelement (22, 32, 42, 52, 62) mindestens ein Federkissen (24, 24'; 34, 34', 34", 34"'; 54, 54'; 64) aus Weich-PVC und/oder mindestens eine Tellerfeder (44, 44', 44", 44"') und/oder mindestens eine Schraubenfeder aufweist.

4. Gleitblock nach wenigstens einem der Ansprüche 1 bis 3,
**dadurch gekennzeichnet,**
dass das Federelement (22, 32, 42) mindestens zwei parallel geschaltete Federkissen (24, 24, 34, 34', 34", 34"'), Tellerfedern (44, 44', 44', 44"') oder Schraubenfedern aufweist.

5. Gleitblock nach Anspruch 4,
**dadurch gekennzeichnet,**
dass das Federkissen (24, 24', 34, 34', 34", 34"', 54, 54', 64) zylindrisch, quader- oder würfelförmig ausgebildet ist.

6. Gleitblock nach wenigstens einem der Ansprüche 3 bis 5,
**dadurch gekennzeichnet,**
dass das Aufsatzelement (23, 33, 33', 43) und/oder das Basiselement (21, 31, 41, 51, 61, 61') im Bereich des Federkissens (24, 24', 34, 34', 34", 34"', 54, 54', 64) eine oder mehrere Aussparungen (37, 37') aufweist.

7. Gleitblock nach wenigstens einem der Ansprüche 1 bis 6,
**dadurch gekennzeichnet,**
dass am Basiselement (21, 31, 41, 61) ein quer abstehender Stift (29, 39, 49, 69) vorgesehen ist, mit dem der Gleitblock (20, 30, 40, 60) in einer entsprechenden Aussparung am Teilstück (4, 6) gehalten ist.

8. Gleitblock nach wenigstens einem der Ansprüche 1 bis 7,
**dadurch gekennzeichnet,**
dass zumindest das Basiselement (21, 31, 41, 51, 61, 61') aus glasfaserverstärktem Polybutylenterephtalat (PBTP) mit einen Glasfaseranteil von 10 % bis 50 %, vorzugsweise 30 % hergestellt ist.

9. Teleskopsäule, insbesondere für Montage- oder Operationstische, mit mindestens zwei teleskopartig ineinandergreifenden Teilstücken, an denen mindestens ein Gleitblock sowie mindestens ein axiales Führungselement vorgesehen ist, wobei der Gleitblock in ein Führungselement des benachbarten Teilstückes eingreift,
**dadurch gekennzeichnet,**
dass zumindest ein Gleitblock (14) nach wenigstens einem der vorhergehenden Ansprüche ausgebildet ist.

10. Teleskopsäule nach Anspruch 9,
**dadurch gekennzeichnet,**
dass über den Umfang eines Teilstückes (4, 6) verteilt mindestens zwei Gleitblöcke (60) vorgesehen sind, die ein tangential und radial wirkendes Federelement (62) aufweisen.

11. Teleskopsäule nach Anspruch 9,
**dadurch gekennzeichnet,**
dass über den Umfang eines Teilstückes (4, 6) verteilt vier Gleitblöcke (20, 30, 40, 50) vorgesehen sind, von denen zwei ein tangential wirkendes Federelement (22, 32, 42, 52) und die anderen zwei ein radial oder ein tangential und radial wirkendes Federelement (62) aufweisen.

12. Teleskopsäule nach Anspruch 11,
**dadurch gekennzeichnet,**
dass jeweils gleichwirkende Gleitblöcke sich gegenüberliegend angeordnet sind.

## Claims

1. Slide block to be used in a telescopic pillar (2) composed of at least two pieces telescopically engaged into one another, whereas the slide block (14, 20, 30, 40, 50, 60) is mountable on one piece of the telescopic pillar (2) and is insertable into an axial groove (12) provided on the other piece,
**characterized in that** the slide block (14, 20, 30, 40, 50, 60) is composed of one base element (21, 31, 41) and of at least one annexable element (23, 33, 33', 43) or of two base elements (51, 61, 61'), and that a spring element (22, 32, 42, 52, 62) is arranged inside the slide block (14, 20, 30, 40, 50, 60) in such a manner that the base element (21, 31, 41) and the annexable element (23, 33, 33', 43) or the two base elements (51, 61, 61') are pressed against side walls of the axial groove (12).

2. Slide block according to claim 1,
**characterized in that** the spring element (22, 32, 42, 52, 62) presses the base element (21, 31, 41) and the annexable element (23, 33, 33', 43) or the two base elements (51, 61, 61') also against the telescopically engaged pieces of the telescopic pillar (2).

3. Slide block according to at least one of the previous claims,
**characterized in that** the spring element (22, 32, 42, 52, 62) is provided with at least one spring pad (24, 24'; 34, 34', 34", 34"'; 54, 54'; 64) made of PVC non-rigid and/or with at least one disk spring (44, 44', 44", 44"') and/or with at least one coil spring.

4. Slide block according to at least one of the claims 1 to 3,
**characterized in that** the spring element (22, 32, 42) is provided with at least two paralleled spring pads (24, 24', 34, 34', 34", 34"'), disk springs (44, 44', 44", 44"') or coil springs.

5. Slide block according to claim 4,
**characterized in that** the spring pad (24, 24', 34, 34', 34", 34"', 54, 54', 64) has got the shape of a cylinder, a parallelepipedon or a cube.

6. Slide block according to at least one of the claims 3 through 5,
**characterized in that** the annexable element (23, 33, 33', 43) and/or the base element (21, 31, 41, 51, 61, 61') is provided in the area of the spring pad (24, 24', 34, 34', 34", 34"', 54, 54', 64) with one or more recesses (37, 37').

7. Slide block according to at least one of the claims 1 through 6,
**characterized in that** at the base element (21, 31, 41, 61) a transverse projecting piece (29, 39, 49, 69) is provided, by means of which the slide block (20, 30, 40, 60) is maintained in a corresponding recess on the piece (4, 6).

8. Slide block according to at least one of the claims 1 through 7,
**characterized in that** at least the base element (21, 31, 41, 51, 61, 61') is made of glas fiber reinforced polybuteneterephthalate (PBTP) having a glas fiber share of 10% to 50%, preferably of 30%.

9. Telescopic pillar, particularly for assembly or operating tables, with at least two pieces, which are telescopically engaged into one another and which are provided with at least one slide block as well as with at least one axial guide element, whereas the slide block engages in a guide element of the adjacent piece,
**characterized in that** at least one slide block (14) is designed according to at least one of the previous claims.

10. Telescopic pillar according to claim 9,
**characterized in that** at least two slide blocks (60) are provided, which are distributed over the circumference of a piece (4, 6) and which are fitted with a spring element (62) acting in tangential and radial direction.

11. Telescopic pillar according to claim 9,
**characterized in that** four slide blocks (20, 30, 40, 50) are provided, which are distributed over the circumference of a piece (4, 6), two of them having a spring element (22, 32, 42, 52) acting in tangential direction and the other two having a spring element (62) acting in radial direction or one acting in tangential and radial direction.

12. Telescopic pillar according to claim 11,
**characterized in that** slide blocks acting in the same way are arranged so as to face each other.

## Revendications

1. Bloc coulissant destiné à être utilisé dans un pilier télescopique (2) composé d'au moins deux éléments s'emboîtant et coulissant l'un dans l'autre à la manière d'un télescope, le bloc coulissant (14, 20, 30, 40, 50, 60) pouvant être disposé sur un élément du pilier télescopique (2) et pouvant être inséré dans une rainure (12) axiale prévue dans un autre élément,
**caractérisé en ce que** le bloc coulissant (14, 20, 30, 40, 50, 60) est composé d'un élément de base (21, 31, 41) et d'au moins un élément complémentaire amovible (23, 33, 33', 43) ou bien de deux éléments de base (51, 61, 61'), et que un élément élastique (22, 32, 42, 52, 62) est positionné à l'intérieur du bloc coulissant (14, 20, 30, 40, 50, 60) de telle sorte que l'élément de base (21, 31, 41) et l'élément complémentaire amovible (23, 33, 33', 43) ou bien les deux éléments de base (51, 61, 61') se trouvent pressés contre les parois latérales de la rainure axiale (12).

2. Bloc coulissant selon la revendication 1,
**caractérisé en ce que** l'élément élastique (22, 32, 42, 52, 62) presse l'élément de base (21, 31, 41) et l'élément complémentaire amovible (23, 33, 33', 43) ou bien les deux éléments de base (51, 61, 61') aussi contre les éléments s'emboîtant et coulissant l'un dans l'autre à la manière d'un télescope du pilier télescopique (2).

3. Bloc coulissant selon au moins une des revendications précédentes,
**caractérisé en ce que** l'élément élastique (22, 32, 42, 52, 62) est pourvu d'au moins une semelle de ressort (24, 24'; 34, 34', 34", 34"'; 54, 54'; 64) en PVC mou et/ou d'au moins une rondelle conique (44, 44', 44", 44"') et/ou d'au moins un ressort cylindrique.

4. Bloc coulissant selon au moins une des revendications 1 à 3,
**caractérisé en ce que** l'élément élastique (22, 32, 42) est pourvu d'au moins deux semelles de ressort (24, 24', 34, 34', 34", 34"'), rondelles coniques (44, 44', 44", 44"') ou ressorts cylindriques disposés parallèlement l'un par rapport à l'autre.

5. Bloc coulissant selon la revendication 4,
**caractérisé en ce que** la semelle de ressort (24, 24', 34, 34', 34", 34"', 54, 54', 64) a une forme cylindrique, de parallélépipède ou de cube.

6. Bloc coulissant selon au moins une des revendications 3 à 5,
**caractérisé en ce que** l'élément complémentaire amovible (23, 33, 33', 43) et/ou l'élément de base (21, 31, 41, 51, 61, 61') sont pourvus, dans les parages de la semelle de ressort (24, 24', 34, 34', 34", 34"', 54, 54', 64), d'un ou de plusieurs évidements (37, 37').

7. Bloc coulissant selon au moins une des revendications 1 à 6,
**caractérisé en ce que** une goupille (29, 39, 49, 69) faisant saillie transversalement est prévue sur l'élément de base (21, 31, 41, 61), au moyen de laquelle le bloc coulissant (20, 30, 40, 60) est maintenu dans un évidement approprié dans l'élément (4, 6).

8. Bloc coulissant selon au moins une des revendications 1 à 7,
**caractérisé en ce que** l'élément de base (21, 31, 41, 51, 61, 61') au moins est fait en polybutène-téréphtalate (PBTP) armé aux fibres de verre ayant un pourcentage de fibres de verre de 10% à 50%, de préférence de 30%.

9. Pilier télescopique, pour tables de montage ou d'opération, avec au moins deux éléments s'emboîtant et coulissant l'un dans l'autre à la manière d'un télescope et pourvus d'au moins un bloc coulissant ainsi que d'au moins une glissière axiale, le bloc coulissant s'engageant dans une glissière de l'élément voisin,
**caractérisé en ce que** au moins un bloc coulissant (14) est configuré selon au moins une des revendications précédentes.

10. Pilier télescopique selon la revendication 9,
**caractérisé en ce que** au moins deux blocs coulissants (60) se trouvent répartis sur la circonférence d'un élément (4, 6), lesdits blocs coulissants étant pourvus d'un élément élastique (62) à action tangentielle et radiale.

11. Pilier télescopique selon la revendication 9,
**caractérisé en ce que** quatre blocs coulissants (20, 30, 40, 50) se trouvent répartis sur la circonférence d'un élément (4, 6), deux desdits blocs coulissants étant pourvus d'un élément élastique (22, 32, 42, 52) à action tangentielle et les deux autres d'un élément élastique (62) à action radiale ou à action tangentielle et radiale.

12. Pilier télescopique selon la revendication 11,
**caractérisé en ce que** les blocs coulissants à action égale se trouvent disposés face à face.
